# EUROPEAN PATENT SPECIFICATION

(11) **EP 4 355 450 B1**
(45) Date of publication and mention of the grant of the patent: **06.08.2025**
(21) Application number: 22741371.3
(22) Date of filing: 16.06.2022
(51) Int. Cl.: B01D 3/32

(54) **CONSTRUCTION OF MASS TRANSFER COLUMNS**
KONSTRUKTION VON MASSENTRANSFERSÄULEN
CONSTRUCTION DE COLONNES DE TRANSFERT DE MASSE

(30) Priority: 15.06.2021 US 202163210513 P
(43) Date of publication of application: 24.04.2024
(73) Proprietor: Koch-Glitsch, LP, Wichita, KS 67220 (US)
(72) Inventor: EWY, David, Wichita, Kansas 67220 (US); HEADLEY, Darran, Wichita, Kansas 67220 (US); LAYTON, Erik, Wichita, Kansas 67220 (US); NIEUWOUDT, Izak, Wichita, Kansas 67220 (US); QUOTSON, Patrick, Wichita, Kansas 67220 (US)
(74) Representative: Ter Meer Steinmeister & Partner
(86) International application number: PCT/IB2022/055556
(87) International publication number: WO 2022/264067

(56) References cited:
- CN-A- 106 902 626
- CN-A- 109 954 397
- CN-U- 202 666 656
- US-A- 4 514 260

## Description

### BACKGROUND ART

The present disclosure generally relates to construction of mass transfer columns.

Mass transfer columns are used for separating fluids into two or more product streams of specific composition and/or temperature. The term "mass transfer column" as used herein is intended to encompass absorbers, separators, distillation columns, divided wall columns, liquid-liquid extractors, scrubbers, and evaporators, which facilitate heat and/or mass transfer between two or more fluid phases. Some mass transfer columns, such as those used in multicomponent absorption and distillation, are configured to contact gas and liquid phases, while other mass transfer columns, like extractors, are configured to contact two liquid phases of differing density.

Mass transfer columns typically have a cylindrically-shaped shell that is constructed from any of various metals or metal alloys and defines an open internal region where the mass transfer processes occur. Various internals, such as trays, structure packing, random packing, or other mass transfer structures, support grids, downcomers, feed inlet devices, fluid collectors, and fluid distributors may be present in the open internal region. These internals are typically supported directly or indirectly by the shell using support rings, bolting bars, and similar devices that are welded to an inner surface of the shell. Larger mass transfer columns will often include beams that support the internals and are mounted on seats that are welded to the inner surface of the shell.

The thickness of the shell must be selected to provide the strength necessary to withstand the various loads exerted on it by the internals, flowing fluids, and the internal operating pressures. As mass transfer columns increase in height and/or diameter, the loads exerted on the shell increase and other ways are needed to bear those loads than simply increasing the thickness of the metal shell. For example, absorbers that are used to separate carbon dioxide from flue gasses generated by fossil fuel-based power plants may be 15 to 24 meter (50 to 80 feet). or larger in diameter. In some instances, the shells in such absorbers have been constructed using metal-reinforced concrete to provide the strength needed to withstand the loads to which they are subjected. While the metal-reinforced concrete can form a high-strength shell, it provides challenges in providing metal surfaces to which support rings, bolting bars, beams seats may be welded. As a result, a need remains for a way to fabricate a shell having suitable strength for use in mass transfer columns, particularly those having large diameters, while allowing for the ready attachment of support structures for internals. An example of a prior art structure is provided in CN106902626A.

### SUMMARY

In one aspect, the present disclosure is directed to a mass transfer column according to claim 1.

In a further aspect, the present disclosure is directed to method for removing carbon dioxide from a flue gas as defined in claim 9.

### BRIEF DESCRIPTION OF THE DRAWINGS

In the accompanying drawings that form part of the specification and in which like reference numerals are used to indicated like components in the various views:
Fig. 1 is a side perspective view of a mass transfer column constructed in accordance with an embodiment of the present disclosure;
Fig. 2 is a side perspective view of the mass transfer column shown in Fig. 1, but with an exterior portion removed to show internal details of the mass transfer column;
Fig. 3 is a side perspective view of the mass transfer column shown in Figs. 1 and 2, but with more exterior portions removed than in the view shown in Fig. 2;
Fig. 4 is a side elevation view of the mass transfer column shown in Figs. 1-3 and taken in vertical section;
Fig. 5 is an enlarged, side elevation view of a fragmental portion of the mass transfer column of Figs. 1-4 and showing one embodiment of a shell of the mass transfer column and seats for supporting a horizontal beam in the form of a truss;
Fig. 6 is an enlarged, side elevation view similar to that shown in Fig. 5, but showing a second embodiment of the shell of the mass transfer column and the seats for supporting the horizontal beam;
Fig. 7 is an enlarged, side elevation view similar to that shown in Figs. 5 and 6, but showing a third embodiment of the shell of the mass transfer column and the seats for supporting the horizontal beam;
Fig. 8 is an enlarged, side elevation view similar to that shown in Figs. 5-7, but showing a fourth embodiment of the shell of the mass transfer column and the seats for supporting the horizontal beam; and
Figs. 9-10 are side elevation views of a support column that may be positioned within an open internal region of the mass transfer column and is shown supporting adjacent ends of aligned beam segments of beams that span the open internal region.

### DETAILED DESCRIPTION OF THE PREFERRED EMBODIMENTS

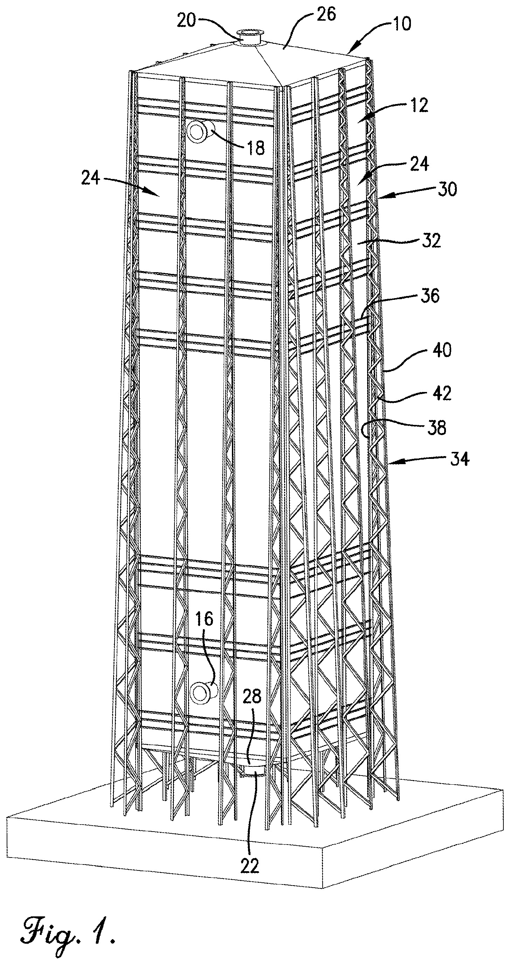

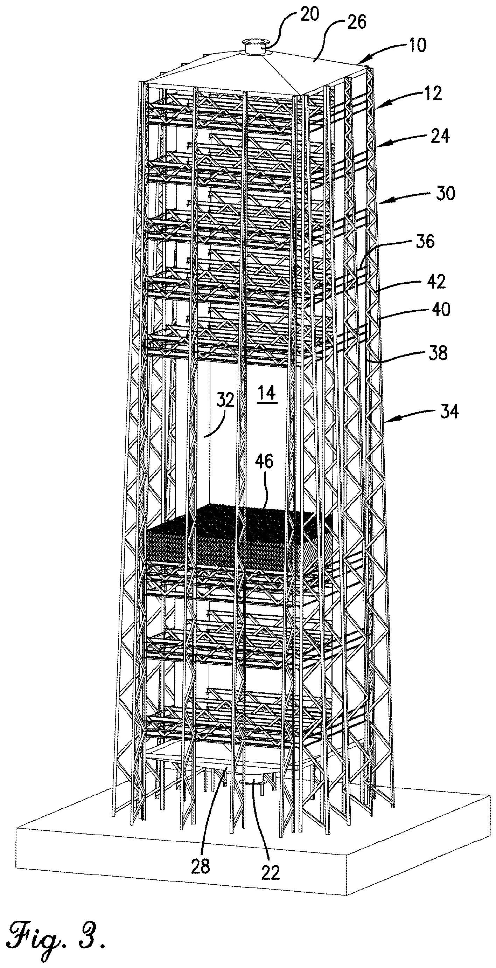

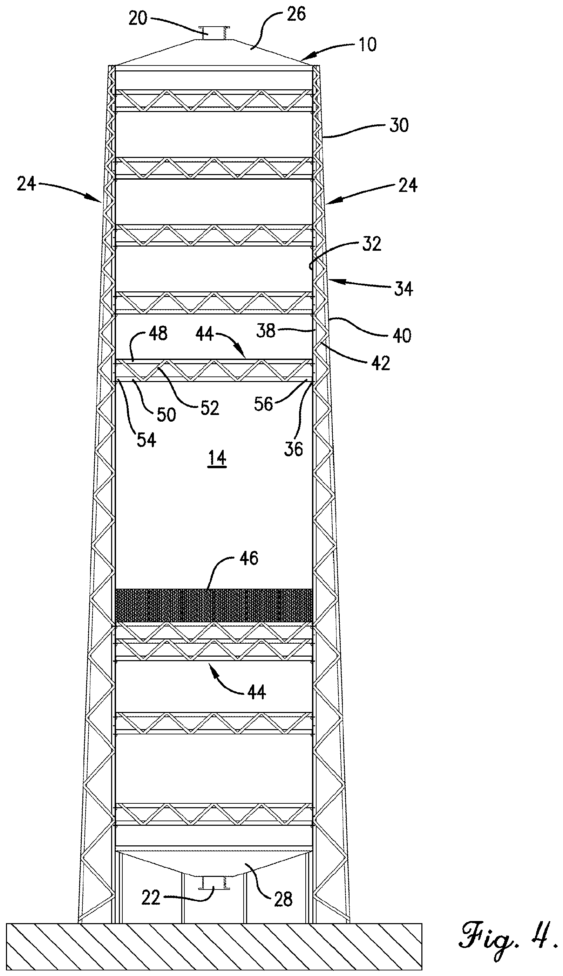

Turning now to the drawings in greater detail and initially to Figs. 1-4, a mass transfer column suitable for use in a variety of mass transfer, heat exchange, and/or reaction processes is represented generally by the numeral 10. The mass transfer column 10 may be located in any suitable type of processing facility including, but not limited to, a fossil-fuel based power plant, a chemical processing plant, a petroleum refinery, a chemical production facility, a light hydrocarbon separation facility, and the like.

The mass transfer column 10 may be any type of column for processing fluid streams, usually liquid and vapor streams or two or more liquid streams having different densities, to obtain fractionation products, or to otherwise cause mass transfer and/or heat exchange between the fluid phases. Examples of suitable types of mass transfer columns 10 include, but are not limited to, absorber columns, separators, distillation columns, liquid-liquid extraction columns, scrubber columns, and evaporator columns. The mass transfer column 10 may be one in which crude atmospheric fractionating, lube or crude vacuum oil fractionation, catalytic or thermal cracking fractionating, coker or visbreaker fractionating, coker or cracking scrubbing, reactor off-gas scrubbing, gas quenching, edible oil deodorization, pollution control scrubbing, reactive distillation, or other types of processes occur.

As one specific example, the mass transfer column 10 may be an absorber that is used to remove carbon dioxide from a flue gas generated by a fossil fuel-based power plant. In such an application, the mass transfer column 10 may used as part of a system that may include another mass transfer column that receives the flue gas after it has been subjected to a NOx removal process and cools the ascending flue gas by countercurrent flow with descending water through mass transfer structures such as structured packing. The cooled flue gas is then directed as a side stream to the mass transfer column 10 that acts an absorber. The ascending cooled flue gas flows in the absorber countercurrently with a descending carbon dioxide absorbing solvent. The rich solvent is removed as a bottoms and directed to one or more other mass transfer columns that act(s) as a stripper to separate the carbon dioxide from the rich solvent stream and to regenerate the solvent.

As shown in Figs. 1-4, the mass transfer column 10 includes a shell 12 that has a square cross-sectional shape. The shell 12 may be either vertically oriented as shown in Figs. 1-4 or it may be horizontally oriented (or elongated). Other cross-sectional shapes, such as a rectangular or other polygonal shapes, or a circular shape are possible and may be used in place of the square cross-sectional shape shown in Figs. 1-4. The shell 12 may be of any suitable dimensions and is particularly adapted for use in large mass transfer columns 10. For example, in one embodiment, the shell 12 may have a width in the range of 12 to 30 meter (40 to 100 feet) and a height in the range of 15 to 90 meter (50 to 300 feet).

The shell 12 of the mass transfer column 10 defines an open internal region 14 in which the desired mass transfer, heat exchange, and/or reaction between the fluid phases takes place. In one embodiment, the fluid phases within the mass transfer column 10 may include ascending vapor and descending liquid, such as when the mass transfer column 10 is acting as an absorber in a process for separating carbon monoxide from a flue gas. In other embodiments, the fluid phases within the mass transfer column 10 may comprise substantially any combination of ascending or descending liquid and ascending or descending vapor. In some embodiments, the fluid phases within the mass transfer column 10 may include ascending or descending liquids having different densities. The fluid phases within the mass transfer column 10 may move in a co-current manner, such that the vapor and liquid phases, or both liquid phases, move in the same direction along a longitudinal axis of the mass transfer column 10, or the fluid streams within the mass transfer column 10 may move in a counter-current manner, such that the vapor or liquid phase moves in the opposite direction as the other phase within the mass transfer column 10.

One or more fluid streams may be introduced into the mass transfer column 10 via one or more feed lines, such as through feed line nozzles 16 and 18 shown in Figs. 1-4. In some embodiments, the mass transfer column 10 may include additional feed line nozzles (not shown) for introducing other fluid streams at one or more other locations. When the fluid streams contacted in the mass transfer column 10 include a vapor stream or phase, the vapor may be introduced into the mass transfer column 10 through the feed line nozzle 16 (or another separate feed line nozzle) and/or all or a portion of the vapor phase may be generated within the mass transfer column 10 during operation.

As also shown in Fig. 1, one or more fluid streams may be withdrawn from the mass transfer column 10 through one or more takeoff nozzles, shown as an upper (or overhead) takeoff nozzle 20 and a lower (or bottom) takeoff nozzle 22. In some embodiments, a vapor stream may be removed from the mass transfer column 10 through the upper takeoff nozzle 20, while a liquid stream may be removed from the mass transfer column 10 through the lower takeoff nozzle 22. For example, when the mass transfer column 10 is operating as an absorber to remove carbon dioxide from a flue gas, the processed flue gas from which the carbon dioxide has been absorbed is removed through the upper take off nozzle 20 and the rich solvent containing the carbon dioxide is removed through the lower takeoff nozzle 22

The mass transfer column 10 may also include typical components such as one or more heat exchangers for heating and/or cooling the fluid streams introduced into and/or withdrawn from the mass transfer column 10, a condenser for cooling the overhead vapor stream withdrawn from the mass transfer column 10 via the upper takeoff nozzle 20, and a reboiler for heating the bottom liquid stream withdrawn from the mass transfer column 10 via the lower takeoff nozzle 22. These components are not shown because of their conventional nature.

The shell 12 of the mass transfer column 10 has at least one side wall 24, and a top 26 and a bottom 28 that are joined to the side wall 24. The number of side walls 24 is dependent upon the cross sectional shape desired for the shell 12. For example, when the shell 12 has a circular cross section, a single side wall 24 may be used. When the shell 12 has a square or rectangular cross section, four of the side walls 24 are used. The side walls 24 each comprise an exoskeleton 30 that supports a skin 32. In one embodiment, the exoskeleton 30 comprises a plurality of upright trusses 34 that are spaced apart from each other and rails 36 that join together adjacent ones of the upright trusses 34. The upright trusses 34 and the rails 36 each have opposed inner and outer faces.

The upright trusses 34 may extend vertically and in parallel relationship to each other. The upright trusses 34 are each formed by an inner cord 38 and an outer cord 40 that are spaced apart from each other and are interconnected by web members 42. The inner cord 38 and the outer cord 40 in each upright truss 34 may extend in parallel relationship to each other or, as illustrated in Figs. 1-4, the inner cord 38 may extend vertically and the outer cord 40 may be angled toward the inner cord 38 in the upward direction because the load carried by the upright trusses 34 decreases in the upright direction. The web members 42 are arranged in a suitable fashion to provide the strength necessary to withstand the loads carried by the upright trusses 34. The web members 42 are arranged in a triangular configuration.

The skin 32 is supported by the upright trusses 34 and rails 36 and, together with the top and bottom 26 and 28 define the open internal region 14 that may be pressurized and in which the mass transfer processes occur. The skin 32 has opposed inner and outer faces and the side feed line nozzles 16 and 18 extend through the skin 32. The upper take off nozzle 20 and the lower take off nozzle 22 normally extend through the top 26 and bottom 28, respectively, of the shell 12.

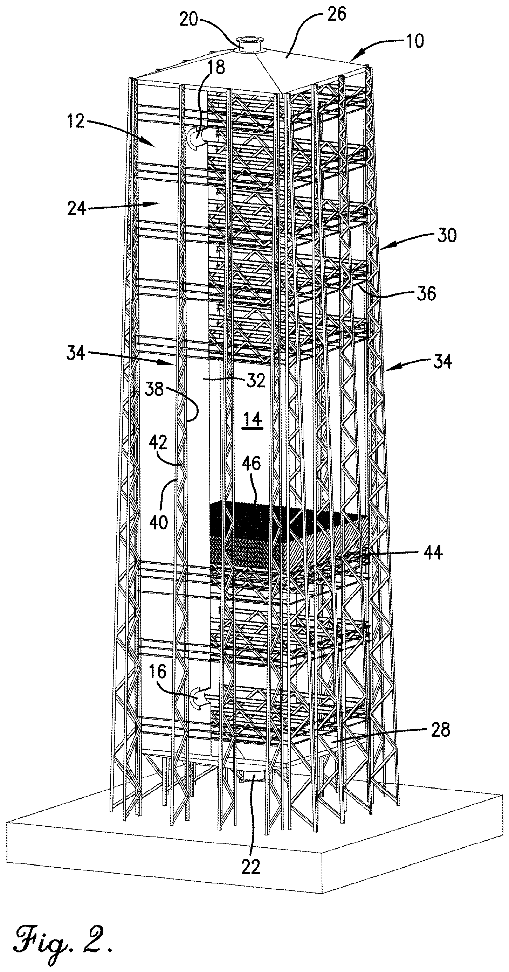

Turning more specifically to Figs. 2-4, a plurality of horizontally extending beams 44 span the open internal region 14 and may be used to support various internals, such as the illustrated structured packing 46. The horizontally extending beams 44 may be trusses, as illustrated, each of which comprise spaced apart upper and lower chords 48 and 50, respectively, and interconnecting web members 52. The web members 52 are arranged to form the triangular structure or, alternative, they may be arranged to form other geometric structures capable of supporting the intended loads. The horizontally extending beams 44 have opposite end segments 54 and 56 that are supported in one embodiment by seats 58 that, in turn, are supported by the shell 12 of the mass transfer column 10.

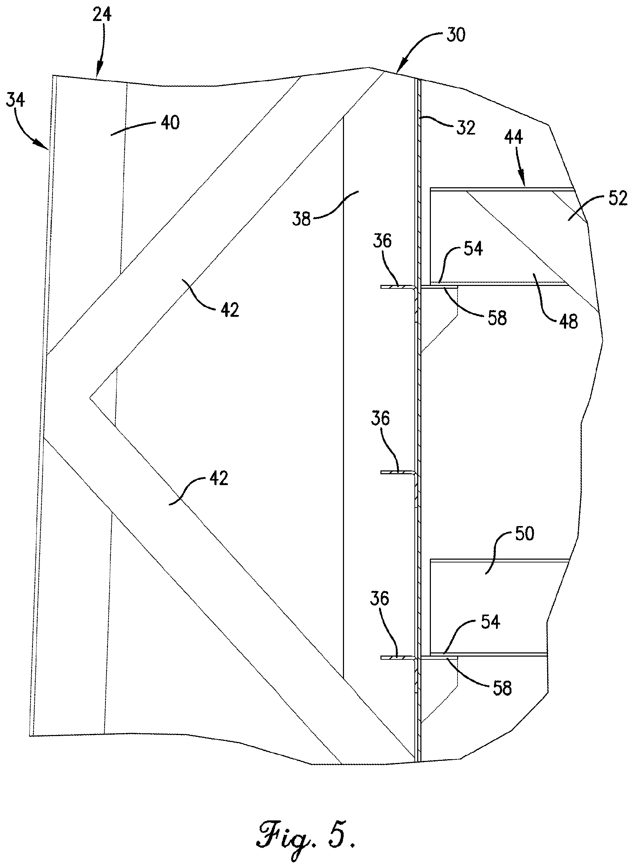

Turning now to Figs. 5-8, different side wall 24 constructions are illustrated. In Fig. 5, the rails 36 are positioned so that their inner faces lie in the same plane as the inner face of the upright truss 34, specifically the inner face of the inner cord 38. The skin 32 is applied to the inner faces of the rails 36 and upright truss 34 and the seats 58 are joined to the inner face of the skin 32. The seats 58 are arranged so that the horizontally extending beams 44 are supported on top surfaces of the seats 58 and, in one embodiment, are able to move along the top surfaces of the seats in response to thermal expansion and retraction of the horizontally extending beams 44. The seats 58 may be in alignment with the upright trusses 34 or the rails 36 or they may be positioned so that they are not aligned with either the upright trusses 34 or the rails 36 to provide greater flexibility in the positioning of the horizontally extending beams 44 within the open internal region 14. The rails 36 may be joined to the upright trusses 34 by bolting, welding or other suitable means. The skin 32 likewise may be joined to the upright trusses 34 and/or the rails 36 and the seats may be joined to the skin 32 by welding, bolting or other means.

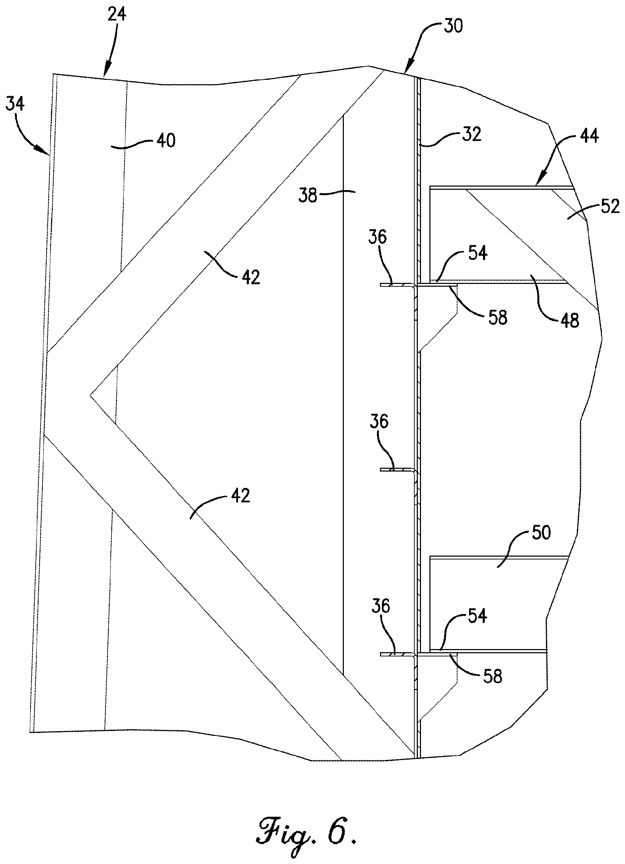

In Fig. 6, the inner faces of the rails 36 are positioned inwardly from the inner face of the upright truss 34 and the skin 32 is applied to the inner faces of the rails 36. The seats 58 are joined to the rails 36 or the upright truss 34, rather than to the skin 32 as shown in Fig. 5. Cutouts are provided in the skin 32 to accommodate each rail 36 and a seal weld is applied around the perimeter of each cutout to join the skin 32 to each seat 58.

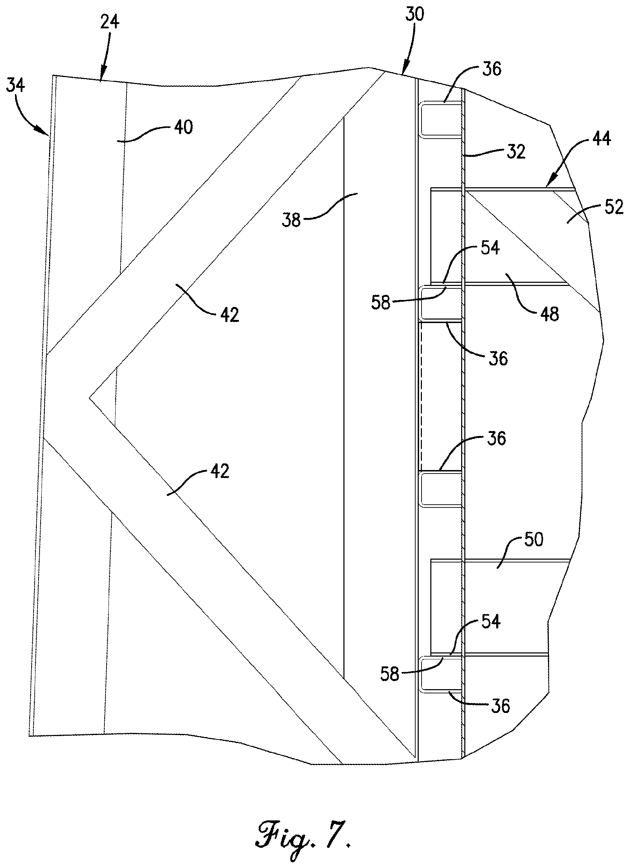

In Fig. 7, the rails 36 are applied to the inner faces of the upright trusses 34 and may span multiple ones of the upright trusses 34. The skin 32 is applied to the inner faces of the rails 36 and is spaced from the inner faces of the upright trusses 34 by the thickness of the rails 36. A top surface of some or all of the rails 36 may act as the seat 58 for the horizontally extending beams 44 such that the seat 58 comprises a portion of the rails 36. In this embodiment, the horizontally extending beams extend through cutouts provided in the skin 32. A suitable means for sealing the skin 32 to the horizontally extending beams 44 while allowing for thermal expansion and contraction of the horizontally extending beams 44 may be provided. In one embodiment, the skin 32 is seal welded to the horizontally extending beams 44 using more flexible material to accommodate the thermal axial movement of the horizontally extending beams 44.

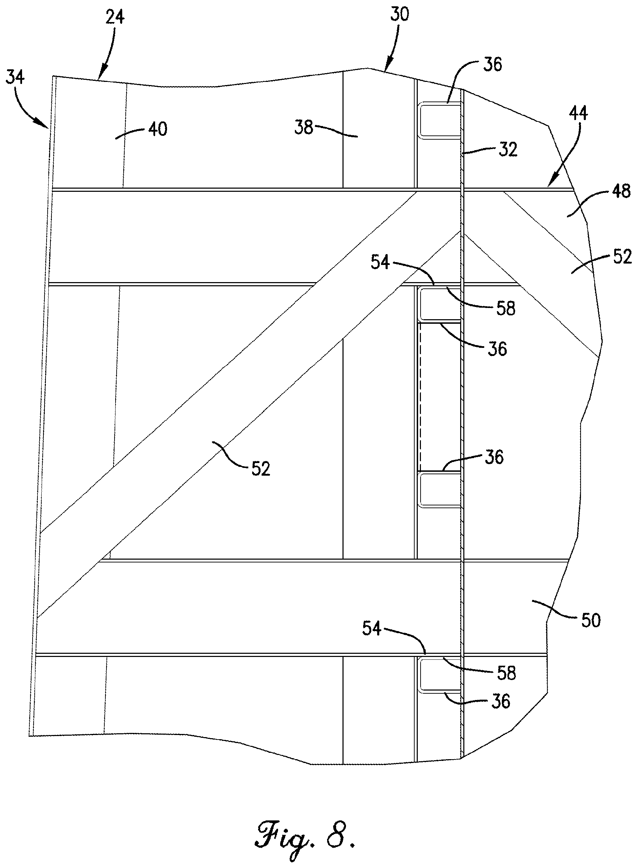

In Fig. 8, the horizontally extending beams 44 extend through the skin 32 in a manner similar to the arrangement shown in Fig. 7, except the end segments of the horizontally extending beams 44 overlap and may be joined to the upright trusses 34. The remainder of the construction may be as described with reference to Fig. 7.

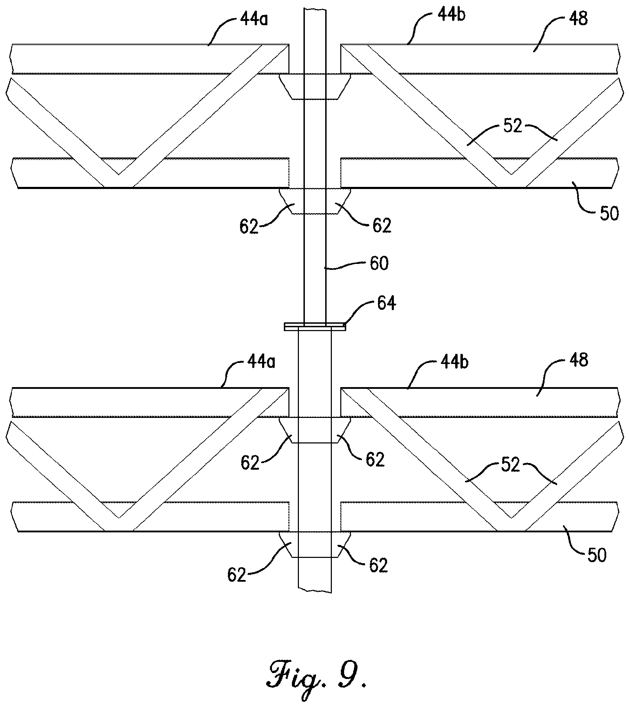

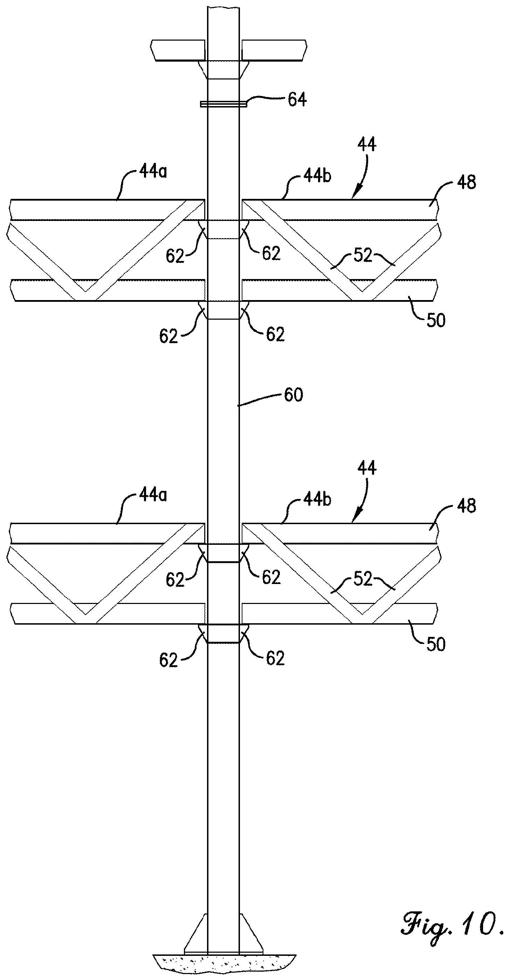

In Figs. 9 and 10, one or more support columns 60 may be positioned within the open internal region 14 to provide support for the horizontally extending beams 44. Seats 62 are provided on the support column 60 to support adjacent ends of two beam segments 44a and 44b that form the horizontally extending beam 44. The support column 60 may be of a modular construction to facilitate insertion within the mass transfer column 10. In one embodiment, the support column 60 is formed from segments that are bolted together using bolting flanges 64.

It can thus be seen that the use of the exoskeleton 30 in the construction of the side wall(s) 24 provides the shell 12 with a high strength that is capable of withstanding high loads, which is particularly beneficial when the mass transfer column 10 is used in applications where the shell 12 has a width in the range of 12 to 30 meter (40 to 100 feet) and a height in the range of 15 to 90 meter (50 to 300 feet). Fabricating the skin 32 and the vertical trusses 34 and rails 36 from metal or metal alloys provides great flexibility for locating and attaching the seats 58 for the horizontally extending beams 44 in the open internal region 14. Fabricating the horizontally extending beams 44 as trusses allows them to span large distances and support the various internals such as structured packing 46 that may be used within the mass transfer column 10.

From the foregoing, it will be seen that this disclosure is one well adapted to attain all the ends and objectives hereinabove set forth, together with other advantages that are inherent to the disclosure.

## Claims

1. A mass transfer column (10) comprising:
a shell (12) comprising at least one side wall (24) and a top and a bottom joined to the side wall (24), the side wall (24) comprising:
a plurality of upright trusses (34) that are spaced apart from each other and have opposed inner and outer faces, wherein the upright trusses (34) are formed by an inner cord (38) and an outer cord (40) that are spaced apart from each other and are interconnected by web members (42), wherein the web members (42) are arranged in a triangular configuration;
rails (36) extending between and joined to adjacent ones of the upright trusses (34) and having opposed inner and outer faces; and
a skin (32) supported by the upright trusses (34) and rails (36) and together with the top and the bottom defining an open internal region (14) that may be pressurized and in which mass transfer processes may occur, the skin (32) having an inner face and an outer face;
a plurality of horizontally extending beams (44) spanning the open internal region (14), each of the horizontally extending beams (44) having opposite end segments (54, 56);
seats (58) supported by the shell (12) and supporting the opposite end segments (54, 56) of the horizontally extending beams (44), wherein the seats (58) are joined to the skin (32) of the shell (12); and
nozzles (16, 18, 20, 22) extending through the skin (32) of the shell (12) for introducing fluid into the open internal region (14) and removing fluid from the open internal region (14).

2. The mass transfer column (10) of claim 1, wherein the horizontally extending beams (44) are trusses.

3. The mass transfer column (10) of claim 2, wherein the horizontally extending trusses extend through the skin (32) and overlap the upright trusses (34).

4. The mass transfer column (10) of claim 1, including internals supported on the beams (44).

5. The mass transfer column (10) of claim 4, wherein the internals comprise structured packing (46).

6. The mass transfer column (10) of claim 1, wherein the end segments (54, 56) of the beams (44) are joined to the upright trusses (34).

7. The mass transfer column (10) of claim 1, wherein the beams (44) each comprises two beam segments (44a, 44b) that are aligned end to end with their adjacent ends supported by a support column (60) positioned within the open internal region (14).

8. The mass transfer column (10) of claim 1, wherein the shell (12) comprises four of said side walls (24) joined together for form a square or rectangular configuration.

9. Method for removing carbon dioxide from a flue gas including use of the mass transfer column (10) of one of claims 1 to 8 as absorber.

## Patentansprüche

1. Massentransfersäule (10), umfassend:
eine Hülle (12), die mindestens eine Seitenwand (24) und eine Oberseite und eine Unterseite umfasst, die mit der Seitenwand (24) verbunden sind, wobei die Seitenwand (24) umfasst:
eine Vielzahl von aufrechten Fachwerkträgern (34), die voneinander beabstandet sind und gegenüberliegende Innen- und Außenseiten aufweisen, wobei die aufrechten Fachwerkträger (34) von einem inneren Band (38) und einem äußeren Band (40) gebildet werden, die voneinander beabstandet sind und über Stegelemente (42) miteinander verbunden sind, wobei die Stegelemente (42) in einer dreieckigen Konfiguration angeordnet sind;
Schienen (36), die sich zwischen benachbarten der aufrechten Fachwerkträger (34) erstrecken und mit diesen verbunden sind und gegenüberliegende Innen- und Außenseiten aufweisen; und
eine Haut (32), die von den aufrechten Fachwerkträgern (34) und Schienen (36) getragen wird und zusammen mit der Oberseite und der Unterseite einen offenen Innenbereich (14) definiert, der unter Druck gesetzt werden kann und in dem Massentransferprozesse stattfinden können, wobei die Haut (32) eine Innenseite und eine Außenseite aufweist;
eine Vielzahl von sich horizontal erstreckenden Balken (44), die den offenen Innenbereich (14) überspannen, wobei jeder der sich horizontal erstreckenden Balken (44) gegenüberliegende Endsegmente (54, 56) aufweist;
Passungen (58), die von der Hülle (12) getragen werden und die gegenüberliegenden Endsegmente (54, 56) der sich horizontal erstreckenden Balken (44) tragen, wobei die Passungen (58) mit der Haut (32) der Hülle (12) verbunden sind; und
Düsen (16, 18, 20, 22), die sich durch die Haut (32) der Hülle (12) erstrecken, um Fluid in den offenen Innenbereich (14) einzubringen und Fluid aus dem offenen Innenbereich (14) zu entfernen.

2. Massentransfersäule (10) nach Anspruch 1, wobei die sich horizontal erstreckenden Balken (44) Fachwerkträger sind.

3. Massentransfersäule (10) nach Anspruch 2, wobei sich die horizontal erstreckenden Fachwerkträger durch die Haut (32) erstrecken und die aufrechten Fachwerkträger (34) überlappen.

4. Massentransfersäule (10) nach Anspruch 1, die Einbauten beinhaltet, die auf den Balken (44) getragen werden.

5. Massentransfersäule (10) nach Anspruch 4, wobei die Einbauten eine strukturierte Packung (46) umfassen.

6. Massentransfersäule (10) nach Anspruch 1, wobei die Endsegmente (54, 56) der Balken (44) mit den aufrechten Fachwerkträgern (34) verbunden sind.

7. Massentransfersäule (10) nach Anspruch 1, wobei die Balken (44) jeweils zwei Balkensegmente (44a, 44b) umfassen, die Ende an Ende ausgerichtet sind, wobei ihre benachbarten Enden von einer Trägersäule (60) getragen werden, die innerhalb des offenen Innenbereichs (14) angeordnet ist.

8. Massentransfersäule (10) nach Anspruch 1, wobei die Hülle (12) vier der Seitenwände (24) umfasst, die miteinander verbunden sind, um eine quadratische oder rechteckige Konfiguration zu bilden.

9. Verfahren zum Entfernen von Kohlendioxid aus einem Rauchgas, das die Verwendung der Massentransfersäule (10) nach einem der Ansprüche 1 bis 8 als Absorber beinhaltet.

## Revendications

1. Colonne de transfert de masse (10) comprenant :
une coque (12) comprenant au moins une paroi latérale (24) et une partie supérieure et une partie inférieure reliées à la paroi latérale (24), la paroi latérale (24) comprenant :
une pluralité de fermes verticales (34) qui sont espacées les unes des autres et présentent des faces interne et externe opposées, dans laquelle les fermes verticales (34) sont formées par un cordon interne (38) et un cordon externe (40) qui sont espacés l'un de l'autre et sont interconnectés par des éléments d'âme (42), dans laquelle les éléments d'âme (42) sont agencés dans une configuration triangulaire ;
des rails (36) s'étendant entre et reliés à des fermes adjacentes parmi les fermes verticales (34) et présentant des faces interne et externe opposées ; et
une peau (32) supportée par les fermes verticales (34) et les rails (36) et définissant conjointement avec la partie supérieure et la partie inférieure une région interne ouverte (14) qui peut être mise sous pression et dans laquelle des processus de transfert de masse peuvent se produire, la peau (32) présentant une face interne et une face externe ;
une pluralité de poutres s'étendant horizontalement (44) couvrant la région interne ouverte (14), chacune des poutres s'étendant horizontalement (44) présentant des segments d'extrémité opposés (54, 56) ;
des sièges (58) supportés par la coque (12) et supportant les segments d'extrémité opposés (54, 56) des poutres s'étendant horizontalement (44), dans laquelle les sièges (58) sont reliés à la peau (32) de la coque (12) ; et
des buses (16, 18, 20, 22) s'étendant à travers la peau (32) de la coque (12) pour introduire du fluide dans la région interne ouverte (14) et retirer du fluide de la région interne ouverte (14).

2. Colonne de transfert de masse (10) selon la revendication 1, dans laquelle les poutres s'étendant horizontalement (44) sont des fermes.

3. Colonne de transfert de masse (10) selon la revendication 2, dans laquelle les fermes s'étendant horizontalement s'étendent à travers la peau (32) et chevauchent les fermes verticales (34).

4. Colonne de transfert de masse (10) selon la revendication 1, incluant des éléments internes supportés sur les poutres (44).

5. Colonne de transfert de masse (10) selon la revendication 4, dans laquelle les éléments internes comprennent un garnissage structuré (46).

6. Colonne de transfert de masse (10) selon la revendication 1, dans laquelle les segments d'extrémité (54, 56) des poutres (44) sont reliés aux fermes verticales (34).

7. Colonne de transfert de masse (10) selon la revendication 1, dans laquelle les poutres (44) comprennent chacune deux segments de poutre (44a, 44b) qui sont alignés bout à bout avec leurs extrémités adjacentes supportées par une colonne de support (60) positionnée à l'intérieur de la région interne ouverte (14).

8. Colonne de transfert de masse (10) selon la revendication 1, dans laquelle la coque (12) comprend quatre desdites parois latérales (24) reliées ensemble pour former une configuration carrée ou rectangulaire.

9. Procédé d'élimination de dioxyde de carbone d'un gaz de combustion incluant l'utilisation de la colonne de transfert de masse (10) selon l'une des revendications 1 à 8 comme absorbeur.
